# EUROPEAN PATENT APPLICATION

(11) **EP 0 773 252 A1**
(43) Date of publication of application: **14.05.1997**
(21) Application number: 95117645.2
(22) Date of filing: 09.11.1995
(51) Int. Cl.: C08J 9/00, C08J 9/14, C08L 25/04

(54) **Foamed articles**

(71) Applicant: IMPERIAL CHEMICAL INDUSTRIES PLC, London SW1P 3JF (GB)
(72) Inventor: Cross, Bernard John, Middlesborough, Cleveland, TS9 5HF (GB); Smith, Peter John, Cuddington, Northwich, Cheshire, CW8 2UD (GB)
(74) Representative: Nevard, Edward John

(57) **Abstract**

A foamed article having a closed cell structure formed from
(i) a polymer blend comprising at least 80% by weight of a styrenic polymer and up to 20% by weight of an acrylic polymer; and
(ii) a gaseous blowing agent
such that the thermal conductivity of the foamed article is no more than 97% of that of a foamed article formed from the styrenic polymer alone.

## Description

The present invention relates to foamed articles formed from a blend of a styrenic polymer and at least one acrylic polymer.

It is well known that polystyrene may be readily foamed by a variety of processes, including extrusion.

GB 2146941 discloses the preparation of a polystyrene foam by an extrusion process.

EP 0411923 is directed towards the preparation of polystyrene foam having a density from 32 to 160 kg.m⁻³ using an extrusion process in which liquid carbon dioxide is employed as a blowing agent.

US 4552904 discloses the preparation of a polystyrene foam by the re-expansion of an extruded foam. The thermal conductivity of the materials produced according to the invention of US 4552904 are shown to have thermal conductivities of 0.032 Kcal.(m.hr.°C)⁻¹, i.e. 37.2 mW.(mK)⁻¹ or above. Furthermore, commercial products are shown to have thermal conductivities of 0.029 Kcal.(m.hr.°C)⁻¹, i.e. 33.7 mW.(mK)⁻¹ or above.

For a foam to be considered a "good" insulating material it should have as low a thermal conductivity as possible and the value of the thermal conductivity should remain stable with time.

The thermal conductivity of a foam is largely associated with the bubble structure within the foam, the density of the foam and the material which fills the bubbles within the foam. In foams that have been blown by gaseous blowing agents, typically carbon dioxide, CFCs and HCFCs, the gaseous blowing agent tends to leach out of the foam to be replaced by air. The thermal conductivity of a foam which contains air is much inferior to that of one within which is retained the gaseous blowing agent.

The present invention provides foams which have lower initial thermal conductivities and retain gaseous blowing agents over longer periods thereby maintaining beneficial thermal properties. Additional benefits may also include the reduced emission of gaseous blowing agents to the environment and the ability to prepare foams without the need for the inclusion of fire retardants within the foam.

Accordingly, in a first aspect the present invention provides a foamed article having a closed cell structure formed from
(i) a polymer blend comprising at least 80% by weight of a styrenic polymer and up to 20% by weight of an acrylic polymer; and
(ii) a gaseous blowing agent
such that the thermal conductivity of the foamed article is no more than 97% of that of an article formed from the styrenic polymer alone.

The styrenic polymer may be a homopolymer or a copolymer of at least one of styrene, methyl styrene and acrylonitrile. Preferably at least 50% of the monomer units of the styrenic polymer are derived from styrene and in particular the styrenic polymer is a homopolymer of styrene. Suitably, the styrenic polymer has an average molecular weight from 180000 to 250000, and preferably from 180000 to 230000, for example about 200000. Adventitiously, the present invention can also be used with styrenic polymers which are obtained at least in part from recycled or scrap materials.

The acrylic polymer may be a homopolymer or a copolymer of at least one C₁₋₈ alkyl (C₁₋₄ alkyl)acrylate, for example methyl methacrylate, methyl acrylate, ethyl acrylate, propyl acrylate and butyl acrylate. Preferably the acrylic polymer is a copolymer, particularly a copolymer containing a methacrylate, e.g. methyl methacrylate, and an acrylate, such as methyl acrylate or ethyl acrylate. The acrylic polymer preferably contains from 50 to 100%, particularly from 80 to 95, and especially 90 to 95 by weight of monomer units which are derived from a methacrylate, e.g. methyl methacrylate, with the balance of the monomer units being derived from at least one acrylate. Preferably, the acrylic polymer has an average molecular weight which is less than 90%, preferably less than 80%, particularly less than 75% and especially from 50 to 60%, that of the styrenic polymer. Suitably, the acrylic polymer has an average molecular weight from 50000 to 180000, preferably from 50000 to 150000 and particularly from 80000 to 140000. Further preferred is that the acrylic polymer contains less than 5 %, in particular less than 2 % of residual monomer (based on the weight of the acrylic polymer).

Generally, increasing the proportion of the acrylic polymer within the polymer blend decreases the conductivity of the foamed article. Typically, a foamed article formed from a polymer blend containing about 10% by weight of an acrylic polymer will show a reduction in thermal conductivity of about 2 mW.(mK)⁻¹ compared with a similar article formed from a styrenic polymer alone.

The addition of the acrylic polymer may cause a reduction in density of the foamed article below that of an article formed from the styrenic polymer alone. However, there may be circumstances where such a reduction in density is not desired and in which case foamed articles of the same density as those formed from styrenic polymer alone may be prepared by controlling the amount of blowing agent and the conditions under which the foamed articles are produced.

The foamed article has a closed cell structure. Typically, the closed cells have sides from 100 to 1000 µ, particularly from 100 to 900 µ and especially from 100 to 600 µ.

The thermal conductivity of the foamed article is typically from 80 to 97%, preferably from 85 to 97 and particularly from 85 to 90% of a similarly foamed article formed from the styrenic polymer alone. This reduction in thermal conductivity is retained even after several months during which time conventional styrenic foams would show an increase in thermal conductivity due to the diffusion of air into and blowing agent out of the foam.

Additionally, the internal gas pressure after the formation of the foam is less in the foam of the present invention as compared with a similarly foamed article formed from the styrenic polymer alone. Typically, the internal gas pressure is from 25 to 75%, preferably from 30 to 70 and particularly from 50 to 70% of the internal gas pressure of a similarly foamed article formed from the styrenic polymer alone. The internal gas pressure is typically within the range 0.15 to 0.4, preferably 0.25 to 0.35 bar.

In use the foamed article may be laminated onto any suitable support material, e.g. plasterboard, wood or an other plastics structure, in order to form an insulated building material and the like.

The foamed article may be formed on conventional extrusion equipment.

Suitable gaseous blowing agents are those typical of the art. The blowing agent therefore includes hydrocarbons such as propane, butane, pentane, isopentane, cyclopentane and heptane; halogenated hydrocarbons such as dichlorodifluoromethane, dichlorotetrafluoroethane, trichlorofluoromethane, difluorochloroethane and tetrafluoroethane; and inert gases such as nitrogen and carbon dioxide. Particularly preferred are polar blowing agents in that these potentially have a greater affinity for the acrylic polymer. Such polar blowing agents can be used at relatively high levels and this further reduces the thermal conductivity of the foamed article.

The quantity of the blowing agent used will depend, at least in part, on the composition of the polymer blend and the desired thermal conductivity of the foamed article. Typical levels range from 2 to 20 kg of blowing agent per 100 kg of polymer. Suitably, a hydrocarbon blowing agent, such as butane, is used at a level from 2 to 8, preferably from 4 to 6 kg per 100 kg of polymer, whereas a halogenated hydrocarbon, such as R22, is used at a level from 5 to 20, preferably from 10 to 15 kg per 100 kg of polymer.

The following examples further illustrate the present invention.

In these examples the indicated polymer blend was melted and mixed with a blowing agent, consisting of 50% by weight of R22 and 50% by weight of R142b, in a heated conventional extruder and thereafter extruded to atmosphere through a die slot having dimensions 3 mm by 300 mm.

The thermal conductivity, internal gas pressure and air content of the foam produced from the blend is with respect to a foamed homopolymer of styrene produced on the same equipment, having an average molecular weight of about 200000 and which was also used in the polymer blends prepared in the following examples.

The acrylic polymers used in the polymer blends were all commercially available materials.

### Example 1

In this example, the acrylic polymer that was used was a copolymer of methyl methacrylate with 5% ethyl acrylate (EA) having an average molecular weight of 129000.

| Example | % Acrylic Polymer in Blend | Thermal Conductivity (%) | Total Gas Pressure (%) | Air Content (%) |
|---|---|---|---|---|
| 1a | 6 | 97 | 67 | 65 |
| 1b | 11 | 83 | 51 | 43 |
| 1b | 11 | 94 | 57 | 51 |

It is therefore evident that increasing the proportion of acrylic polymer in the blend reduces the thermal conductivity, total gas pressure and air content of the foamed article. The reduction in thermal conductivity was retained even after being held in air at a temperature of 70°C for a period of several months.

### Example 2

Example 1 was repeated using a blend containing 20% of the acrylic polymer.

| Example | Thermal Conductivity (%) | Total Gas Pressure (%) |
|---|---|---|
| 2 | 88 | 29 |

## Claims

1. A foamed article having a closed cell structure formed from
(i) a polymer blend comprising at least 80% by weight of a styrenic polymer and up to 20% by weight of an acrylic polymer; and
(ii) a gaseous blowing agent
such that the thermal conductivity of the foamed article is no more than 97% of that of a foamed article formed from the styrenic polymer alone.

2. A foamed article as claimed in claim 1 wherein at least 50% of the monomer units of the styrenic polymer are derived from styrene.

3. A foamed article as claimed in either claim 1 or claim 2 wherein the styrenic polymer is a homopolymer of styrene.

4. A foamed article as claimed in any one of claims 1 to 3 wherein the styrenic polymer has an average molecular weight from 180000 to 250000.

5. A foamed article as claimed in any one of claims 1 to 4 wherein the acrylic polymer contains from 50 to 100% by weight of monomer units which are derived from a methacrylate with the balance of the monomer units being derived from at least one acrylate.

6. A foamed article as claimed in any one of claims 1 to 5 wherein the closed cells have sides in the range from 100 to 1000 µ.

7. A foamed article as claimed in any one of claims 1 to 6 having a thermal conductivity which is from 80 to 97 % of that of a similarly foamed article formed from the styrenic polymer alone.

8. A foamed article as claimed in any one of claims 1 to 7 wherein the internal gas pressure is from 25 to 75% of the internal gas pressure of a similarly foamed article formed from the styrenic polymer alone.

9. A laminate comprising a foamed article as defined in any one of claims 1 to 8 supported on a support material selected from plasterboard, wood or an other plastics structure.

10. Use of the laminate as claimed in claim 9 as an insulated building material.
